**Europäisches Patentamt**

**European Patent Office**

**Office européen des brevets**

(11) Veröffentlichungsnummer : **0 222 095 B2**

(12) # NEUE EUROPÄISCHE PATENTSCHRIFT

(45) Veröffentlichungstag der neuen Patentschrift :
15.04.92 Patentblatt 92/16

(21) Anmeldenummer : **86112374.3**

(22) Anmeldetag : **06.09.86**

(51) Int. Cl.⁵ : **F16B 13/08**

(54) Korrosionsschutz für einen in einem Sackloch verankerten Spreizdübel.

(30) Priorität : 02.11.85 DE 3538995

(43) Veröffentlichungstag der Anmeldung :
20.05.87 Patentblatt 87/21

(45) Bekanntmachung des Hinweises auf die
Patenterteilung :
17.05.89 Patentblatt 89/20

(45) Bekanntmachung des Hinweises auf die
Entscheidung über den Einspruch :
15.04.92 Patentblatt 92/16

(84) Benannte Vertragsstaaten :
AT BE CH FR GB IT LI NL SE

(56) Entgegenhaltungen :
EP-A- 0 312 776
EP-A-00 005 969
CH-A- 465 536
DE-A- 2 547 580
DE-A- 3 209 018
DE-A- 3 735 592
DE-C- 865 077
DE-C- 1 257 081

(56) Entgegenhaltungen :
DE-C- 1 784 458
DE-U- 6 909 859
US-A- 2 690 879
US-A- 2 829 502
US-A- 2 952 129
BETON- UND STAHLBETONBAU, März 1974,
Seiten 74-78, Berlin; G. KERN et al.:
"Betrachtungen zur neueren Entwicklung von
Spannverfahren"
"Glückauf", 26.11.70, Seiten 1145-1154: "Die
Weiterentwicklung des Klebeankers"
Prospekt der Bergwerkverband GmbH:
"SIS-Patronen für den Klebeanker"

(73) Patentinhaber : fischer-werke Artur Fischer
GmbH & Co. KG
Weinhalde 14-18
W-7244 Waldachtal 3/Tumlingen (DE)

(72) Erfinder : Fischer, Artur, Prof. Dr. h.c.
Weinhalde 34
W-7244 Tumlingen/Waldachtal 3 (DE)

(74) Vertreter : Ott, Elmar, Dipl.-Ing.
Patentanwalt Ott und Partner Kappelstrasse 8
W-7240 Horb 1 (DE)

EP 0 222 095 B2

EP 0 222 095 B2

## Beschreibung

Die Erfindung betrifft eine Vorrichtung mit einem Spreizdübel gemäß der Gattung des Anspruchs 1.

Zum Schutz von Spreizdübeln gegen Korrosion sind diese entweder mit einem Korrosionsschutz versehen oder aus einem entsprechend resistenten Material hergestellt. Für Schwerlastbefestigungen kommen in der Regel nur Stahldübel in Frage, die für geringere Korrosionsschutzanforderungen verzinkt und für höhere Anforderungen aus Edelstahl hergestellt sind. Ein solcher Schutz reicht dennoch oftmals nicht aus, da durch in die Ritze und Spalten des Bohrlochs sowie des Spreizdübels eindringene Feuchtigkeit und anderer agressiver Medien zum einen die Bewehrung des Betons und zum anderen durch Kontaktkorrosion die einzelnen Teile des Spreizdübels angegriffen werden können. Letzteres ist auch bei Edelstahldübeln nicht vollständig zu vermeiden, da aus Funktionsgründen und unter Umständen unterschiedlicher Herstellverfahren der Einzelteile eines Dübels verschiedenartige Edelstähle verwendet werden müssen.

Aus der DE-A 3 209 018 ist ein Schlagspreizdübel bekannt, der mittels einer Klebemasse aus zwei Komponenten im Bohrloch befestigt wird. Die Klebemasse bildet nach dem Aushärten eine stabile Verbindung zwischen Dübel und Bohrlochwand im Bereich des Bohrlochgrundes. Die Klebemasse dient bei dieser bekannten Verankerungsmethode nicht als Dichtungsmittel gegen eindringende Feuchtigkeit, sondern ausschließlich als Befestigungsmittel. Dies geht auch daraus hervor, daß am bekannten Schlagspreizdübel in Form eines Dichtringes Maßnahmen ergriffen sind, um sicherzustellen, daß der Kleber nicht am Dübelschaft im Bohrloch in Richtung Bohrlochöffnung aufsteigt. Der Bohrlochschaft wird somit keinesfalls von dem Kleber umgeben, so daß hier ein Korrosionsschutz den den Kleber völlig unmöglich ist.

Der Erfindung liegt die Aufgabe zugrunde, eine Vorrichtung mit einem Spreizdübel zu schaffen, mit der ein Korrosionsschutz durch Verdichten der Dichtmasse im Bohrloch erzielt werden kann.

Die Lösung dieser Aufgabe erhält man durch die im Anspruch 1 angegebenen Merkmale. Die Dichtmasse, beispielsweise Silikon, Mörtelmasse oder dgl. wird mittels einer Spritzkartusche, Tube oder dgl. in das Bohrloch eingefüllt. Sofern die Dichtmassse nicht portionsweise für je ein Bohrloch abgefüllt ist, empfiehlt es sich, das Bohrloch etwa zur Hälfte aufzufüllen. Unmittelbar danach wird der Spreizdübel in das Bohrloch eingetrieben. Die Dichtmasse fließt dabei vom Bohrlochgrund aufsteigend entlang der Mantelfläche des Spreizdübels in Richtung Bohrlochmündung und verschließt dabei die Ritze und Spalten zwischen den einzelnen Dübelteilen einerseits und zwischen dem Dübel und der Bohrlochwandung andererseits. Die auf der Spreizhülse angeordnete Scheibe deckt auch eine stark ausgebrochene Bohrlochmündung vollständig ab. Da die Scheibe die Spreizhülse eng umschließt, entsteht zwischen Scheibe und Spreizhülse eine Reibung, die einen entsprechenden Anpressdruck beim Einschieben des Spreizdübels an der Bohrlochmündung erzeugt. Durch diesen Anpressdruck der Scheibe am Bohrlochrand wird eine Verdichtung der Dichtmasse beim Eintreiben des Spreizdübels erzielt. Damit wird eine bessere Verfüllung des Bohrlochs und insbesondere der ausgebrochenen Bohrlochmündung erreicht. Die überschüssige Dichtmasse wird zwischen dem Rand der Scheibe und der Wandaußenfläche ausgedrückt und kann dort problemlos abgestreift werden. Die Adhäsion zwischen der Dichtmasse und der Scheibe hält diese auf der Bohrlochmündung, auch wenn diese vollständig über die Spreizhülse abgestreift ist. Die Scheibe kann mit dem zu befestigenden Gegenstand verspannt werden. Das aus der Bohrlochmündung ausfließende überschüssige Material kann teilweise zur Verspachtelung der beim Bohren üblicherweise ausbrechenden Bohrlochmündung verwendet werden. Der noch verbleibende Rest wird abgestreift. Die Dichtmasse härtet an der Luft aus und bildet somit einen Verschluß des Bohrloches und gegebenenfalls auch des Dübels. Durch diesen luft- und wasserdichten Verschluß ist ein Eindringen von Feuchtigkeit und anderen agressiven Medien in das Bohrloch verhindert. Somit kann weder eine Kontaktkorrosion zwischen den einzelnen Teilen des Dübels noch eine Korrosion der unmittelbar um den Befestigungspunkt angeordneten Bewehrungsstäbe eintreten.

Eine besonders vorteilhafte Weiterbildung der Erfindung verwendet eine Druckfeder, die zwischen einem Schlagteil und einem gegen die Scheibe drückenden Unterteil angeordnet ist. Je nach Auslegung der Druckfeder kann der gewünschte Verdichtungsgrad der Dichtmasse eingestellt werden. Das scheibenartige Unterteil der Vorrichtung wird durch die Druckfeder beim Eintreibvorgang so stark auf die Bohrlochmündung gepreßt, daß eine optimale Verfüllung des Bohrloches, der Ritze und der Poren des Mauerwerks erfolgt. Zur einfacheren Handhabung der Vorrichtung kann auf das Schlagteil ein Einschlagwerkzeug mit Handgriff aufsetzbar sein, mit dem die zur Verankerung eines Schlagspreizdübels erforderliche Schlagenergie der Vorrichtung auf die Spreizhülse aufgebracht wird.

Schließlich kann in weiterer Ergänzung der Erfindung der Durchmesser des scheibenartigen Unterteils geringfügig kleiner sein als die auf die Spreizhüles aufgesetzte, vorzugsweise aus Kunststoff bestehende Scheibe. Durch diese Maßnahme wird das Unterteil vor Verschmutzung durch unter der Kunststoffscheibe ausquellender überschüssiger Dichtmasse geschützt.

In weiterer Ausgestaltung der Erfindung kann das Unterteil sowie der Flansch des Schlagteiles der Vor-

2

richtung jeweils einen zylindrischen, die Druckfeder haltenden Abschnitt aufweisen. Über die fest auf diesen Flanschen sitzende, ggf. noch in eine umlaufende Ringnut der Flansche eingreifende Druckfeder werden die Teile der Vorrichtung zusammengehalten.

In der Zeichnung sind Ausführungsbeispiele der Erfindung dargestellt.

Es zeigen:

Figur 1 die Verfüllung des Bohrloches mit Dichtmasse

Figur 2 die Verfüllung des Bohrloches und die Verankerung des Schlagspreizdübels unter Verwendung einer Vorrichtung und eines Einschlagwerkzeuges

Figur 3 die Befestigung eines Gegenstandes mit dem korrosionsgeschützten Schlagspreizdübel

In das in einem Vollbaustoff 1 beispielsweise Beton vorbereitete Bohrloch 2 für einen Spreizdübel wird mit einer Spritzkartusche, Tube oder dgl. eine Dichtmasse 3 beispielsweise Silikon, Kunstharz oder Mörtelmasse eingefüllt. In das etwa zur Hälfte mit Dichtmasse gefüllte Bohrloch 2 wird nunmehr der Spreizdübel 4 eingetrieben. Dabei wird die Dichtmasse vom Bohrlochgrund aufsteigend entlang der Mantelfläche des Spreizdübels gepreßt. Die klemmend auf der Spreizhülse aufgesetzte Kunststoffscheibe 5 kommt an der Bohrlochmündung 6 zur Anlage und deckt diese einschließlich der Mündungsausbrüche vollständig ab. Die vom Bohrlochgrund mit fortschreitender Eindringtiefe des Spreizdübels entlang der Mantelfläche aufsteigende Dichtmasse verschließt alle Ritzen und Spalten. Durch die Abdeckung der Bohrlochmündung mit der Scheibe 5 wird eine vollständige Ausfüllung des Bohrloches 2 mit der Dichtmasse 3 erreicht. Die überschüssige Dichtmasse wird zwischen dem Rand der Scheibe 5 und der Wandaußenfläche ausgedrückt und kann abgestreift werden.

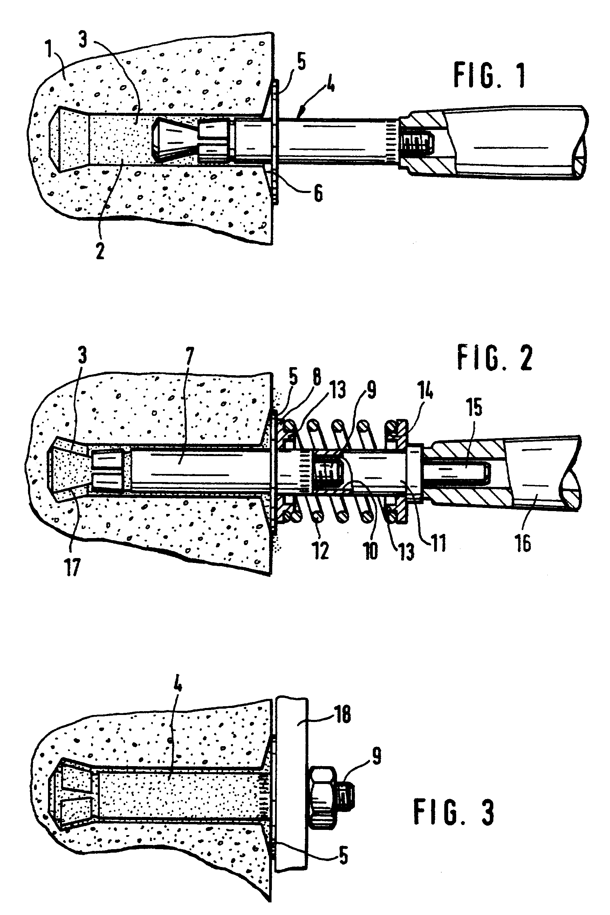

Bei der in Figur 2 dargestellten Verankerung des Spreizdübels 4 ist eine Vorrichtung verwendet, mit der sowohl der Dübel verankert als auch die Dichtmasse 3 zur besseren Verfüllung des Bohrloches 2 verdichtet werden kann. Die Vorrichtung besteht aus einem scheibenartigen, über die Spreizhülse 7 geschobenen Unterteil 8 und einem mit der Stirnseite der Spreizhülse fluchtenden, für die Aufnahme des Stehbolzens 9 eine entsprechende Innenbohrung 10 aufweisenden Schlagteil 11, zwischen denen eine Druckfeder 12 angeordnet ist. Zur Festsetzung der Druckfeder 12 weisen die beiden Teile jeweils einen zylindrischen Flansch 13 auf, auf dem die Druckfeder ggf. noch über eine Ringnut 14 festgesetzt ist. Wenn der Schlagspreizdübel 4 etwa zur Hälfte in das vorbereitete und mit Dichtmasse angefüllte Bohrloch 2 eingeschoben ist, kommt das scheibenartige Unterteil 8 der Vorrichtung an der Mauerwerksaußenfläche zur Anlage. Mit dem auf einem entsprechenden Abschnitt 15 des Schlagteiles aufgesetzten Einschlagwerkzeug 16 wird der Spreizdübel vollständig in das Bohrloch eingetrieben und gleichzeitig die Spreizhülse 7 über den Spreizkonus 17 des Stehbolzens 9 aufgeschlagen. Während dieses Vorganges drückt die Feder 12 das Unterteil 8 fest auf die Bohrlochmündung 6, so daß die vom Bohrlochgrund aufsteigende Dichtmasse zunächst im Bohrloch entsprechend dem Federdruck verdichtet wird. Dadurch ergibt sich eine optimale, alle Ritzen und Spalten schließende Ausfüllung des Bohrloches. Unter das Unterteil ist die dünnwandige Kunststoffscheibe 5 angeordnet, die das Unterteil 8 vor Verschmutzung schützt und die problemlose Abnahme der Vorrichtung nach der Ausfüllung des Bohrloches zuläßt.

Der im Bohrloch befindliche Teil des Schlagspreizdübels 4 ist nunmehr vollständig in Dichtmasse 3 eingehüllt, so daß keine Feuchtigkeit in das Bohrloch eindringen kann. Auf den aus dem Bohrloch ragenden Stehbolzen 9 des Spreizdübels 4 wird nunmehr unter Verspannung der die Bohrlochmündung abdeckenden Kunststoffscheibe der gewünschte Gegenstand 18 befestigt.

**Patentansprüche**

1. Vorrichtung mit einem Spreizdübel für das Verdichten einer Dichtmasse (3) in einem Bohrloch (2) beim Eintreiben des Spreizdübels (4) in das Bohrloch (2), **dadurch gekennzeichnet**, daß etwa auf halber Länge des Spreizdübels (4) eine auf seiner Spreizhülse (7) gegen eine Reibungskraft verschiebbare, ringförmige Scheibe (5) aufgesetzt ist, deren Durchmesser etwa das 3fache des Spreizhülsendurchmessers beträgt.

2. Vorrichtung nach Anspruch 1, **gekennzeichnet durch** ein scheibenartiges, über die Spreizhülse (7) schiebbares Unterteil (8) und ein mit der bezüglich der Setzrichtung rückwärtigen Strinseite der Spreizhülse (7) fluchtendes Schlagteil (11) besitzt, welches einen Flansch hat, wobei zwischen dem Unterteil (8) und dem Flansch des Schlagteiles (11) eine Druckfeder (12) angeordnet ist, die das Unterteil (8) gegen die Scheibe (5) drückt.

3. Vorrichtung nach Anspruch 2, **dadurch gekennzeichnet,** daß die Druckfeder (12) im entspannten Zustand bis etwa zur Mitte der Spreizhülse (7) reicht und vollständig zusammengedrückt eine minimale Länge hat, die geringer ist als der Abstand von der Stirnseite des Schlagteiles (11) bis zu dessen die Druckfeder abstützenden Flansch.

4. Vorrichtung nach einem der Ansprüche 2 oder 3, **dadurch gekennzeichnet**, daß auf das Schlagteil (11) ein Einschlagwerkzeug (16) aufsetzbar ist.

3

5. Vorrichtung nach einem der Ansprüche 2 bis 4, **dadurch gekennzeichnet**, daß der Durchmesser des scheibenartigen Unterteils (8) geringfügig kleiner ist als der Außendurchmesser der auf die Spreizhüle (7) aufgesetzten, vorzugsweise aus Kunststoff bestehenden Scheibe (5).

6. Vorrichtung nach einem der Ansprüche 2 bis 5, **dadurch gekennzeichnet**, daß das Unterteil (8) sowie der Flansch des Schlagteiles (11) jeweils einen zylindrischen, die Druckfeder (12) haltenden Abschnitt (13) aufweisen.

## Claims

1. Apparatus having an expansible plug for compacting a sealing composition (3) in a drilled hole (2) when the expansible plug (4) is driven into the drilled hole (2), characterised in that an annular disc (5) is placed on the expansible plug (4), about half-way along, the disc having a diameter that is approximately three times the diameter of the expansible sleeve and being displaceable on the expansible sleeve (7) against a frictional force.

2. Apparatus according to claim 1, characterised by a disc-like lower part (8) that can be pushed over the expansible sleeve (7) and an impact part (11), having a flange, that is flush with that end face of the expansible sleeve (7) that is at the back in the direction of insertion, a compression spring (12) being arranged between the lower part (8) and the flange of the impact part (11), which spring pushes the lower part (8) against the disc (5).

3. Apparatus according to claim 2, characterised in that the compression spring (12), when relaxed, extends approximately as far as the middle of the expansible sleeve (7) and, when fully compressed, has a minimum length which is shorter than the distance from the end face of the impact part (11) to its flange which supports the compression spring.

4. Apparatus according to either claim 2 or claim 3, characterised in that an impact tool (16) can be placed on the impact part (11).

5. Apparatus according to any one of claims 2 to 4, characterised in that the diameter of the disc-like lower part (8) is slightly smaller than the outside diameter of the disc (5), preferably made of plastics material, placed on the expansible sleeve (7).

6. Apparatus according to any one of claims 2 to 5, characterised in that each of the lower part (8) and the flange of the impact part (11) has a cylindrical portion (13) which holds the compression spring (12).

## Revendications

1. Dispositif comportant une cheville à expansion pour la compression d'une composition (3) d'étanchement dans un trou percé (2) lors de l'introduction en force de la cheville (4) à expansion dans le trou percé (2), dispositif caractérisé en ce qu'un disque annulaire (5) pouvant coulisser à l'encontre d'une force de frottement, est placé à peu près au milieu de la longueur de la cheville (4) à expansion sur la douille (7) d'expansion de cette cheville, le diamètre du disque représentant environ le triple du diamètre de la douille d'expansion.

2. Dispositif selon la revendication 1, caractérisé en ce qu'il comporte une pièce ou partie inférieure (8) en forme de disque, susceptible d'être enfilée sur la douille (7) d'expansion et une pièce (11) à frapper qui affleure au côté frontal arrière (par rapport au sens de mise en place) de la douille (7) qui possède une embase, un ressort (12) de compression étant disposé entre la pièce inférieure (8) et l'embase de la pièce (11) à frapper, ce ressort poussant la pièce inférieure (8) contre le disque (5).

3. Dispositif selon la revendication 2, caractérisé en ce que le ressort (12) de compression s'étend à l'état détendu à peu près jusqu'au milieu de la douille (7) d'expansion et a, lorsqu'il est complètement comprimé, une longueur minimale inférieure à la distance entre la partie frontale de la pièce (11) à frapper et l'embase de celle-ci, sur laquelle le ressort s'appuie.

4. Dispositif selon une des revendications 2 ou 3, caractérisé en ce qu'un outil (16) de frappe peut être placé sur la pièce (11) à frapper.

5. Dispositif selon une des revendications 2 à 4, caractérisé en ce que le diamètre de la pièce inférieure (8), en forme de disque, est légèrement plus petit que le diamètre extérieur du disque (5), de préférence constitué par de la matière plastique, placé sur la douille (7) d'expansion.

6. Dispositif selon une des revendications 2 à 5, caractérisé en ce que la pièce inférieure (8), ainsi que l'embase de la pièce (11) à frapper, présentent chacune une partie (13) cylindrique maintenant le ressort (12) de compression.

FIG. 1

FIG. 2

FIG. 3